# EUROPÄISCHE PATENTSCHRIFT

(11) **EP 2 672 216 B1**
(45) Veröffentlichungstag und Bekanntmachung des Hinweises auf die Patenterteilung: **30.05.2018**
(21) Anmeldenummer: 13170786.1
(22) Anmeldetag: 06.06.2013
(51) Int. Cl.: F28F 27/00, F28D 9/00, G01K 1/14

(54) **WÄRMETAUSCHER**
HEAT EXCHANGER
ÉCHANGEUR DE CHALEUR

(30) Priorität: 06.06.2012 DE 102012104908
(43) Veröffentlichungstag der Anmeldung: 11.12.2013
(73) Patentinhaber: Kelvion Brazed PHE GmbH, 04603 Nobitz (DE)
(72) Erfinder: Aust, Michael, 04603 Nobitz/Niederleupten (DE); Graichen, Dirk, 04603 Nobitz-Wilchwitz (DE)
(74) Vertreter: Bittner, Thomas L.

(56) Entgegenhaltungen:
- EP-A1- 1 362 214
- WO-A1-2010/140954
- DE-A1-102004 006 390
- DE-U1-202009 005 138
- US-A- 1 276 024
- US-A- 2 804 773
- US-A- 3 022 670

## Beschreibung

Die Erfindung betrifft einen Wärmetauscher, insbesondere Plattenwärmetauscher.

### Hintergrund der Erfindung

Wärmetauscher dienen regelmäßig dazu, Wärmeenergie zwischen Wärmetauscherfluiden zu übertragen. Zu diesem Zweck durchströmen die Wärmetauscherfluide im Betrieb gegeneinander abgeschlossene Durchgänge in einer Wärmetauschereinrichtung. Eine mögliche Bauform der Wärmetauschereinrichtung ist der Plattenwärmetauscher.

Plattenwärmetauscher sind in verschiedenen Bauformen bekannt. Hierzu gehören insbesondere gedichtete, gelötete und geschweißte Plattenwärmetauscher. Gemeinsam ist den verschiedenen Bauarten üblicherweise, dass eine gestapelte Anordnung mit wenigstens einer End- oder Begrenzungsplatte, die vorderseitig und / oder rückseitig gebildet ist, und mehreren Wärmetauscherplatten, die gestapelt sind, derart, dass zwischen den Wärmetauscherplatten Durchgänge bildende Hohlräume entstehen, die im Betrieb mehrere Wärmetauschermedien oder -fluide aufnehmen. Üblicherweise werden die Hohlräume von den Wärmetauschermedien durchströmt:

Während bei der gelöteten und der geschweißten Ausführung ein Abdichten der Hohlräume mittels Löt- oder Schweißverbindung erfolgt, sind bei Plattenwärmetauschern in gedichteter Ausführung Dichtungselemente vorgesehen, die in der gestapelten Anordnung die Hohlräume abdichtend angeordnet sind. Gedichtete Plattenwärmetauscher weisen sodann eine Spannvorrichtung auf, die konfiguriert ist, die gestapelte Anordnung mit Endplatten und Wärmetauscherplatten sowie Dichtungselementen vorzuspannen, indem mit Hilfe der Spannvorrichtung ein äußerer Spanndruck aufgegeben wird. Bei bekannten Plattenwärmetauschern in gedichteter Ausführung ist zwischen zwei Druckgestellplatten, die auch als End- oder Begrenzungsplatten bezeichnet werden können, ein Stapel mit Wärmetauscher- oder Wärmeübertragungsplatten angeordnet. Die Spannvorrichtung zum Vorspannen der gestapelten Anordnung ist mit Zugstangen gebildet, die in übergreifenden Bereichen die beiden Endplatten verbinden. Die Zugstangen sind mit Schraubgewinde versehen, so dass ein äußerer Druck einstellbar ist.

Um im Betrieb des Plattenwärmetauschers Informationen über die Temperatur eines oder mehrerer der Wärmetauschermedien zu erfassen, wurde vorgeschlagen, den Plattenwärmetauscher mit einer Messkammer zu bilden, die ein Messmedium in Form eines Fluides aufnimmt. Die Temperatur des Messfluides wird durch die Temperatur wenigstens einer der Wärmetauschermedien beeinflusst. Hierdurch ändern sich die Druck- bzw. Volumenverhältnisse in der Messkammer. Diese Änderungen werden mithilfe einer Sensoreinrichtung gemessen. In dem Dokument EP 1 362 214 B1 werden Ausführungsformen für Plattenwärmetauscher mit einer solchen Messkammer beschrieben. So ist vorgesehen, die Messkammer auf einer ausliegenden Oberfläche einer randseitigen Wärmeübertragungsplatte anzuordnen. In anderen Varianten ist die Messkammer zwischen Wärmeübertragungsplatten gebildet, wobei die Messkammer teilweise oder im Wesentlichen vollständig von den Wärmeübertragungsplatten begrenzt ist.

In dem Dokument DE 20 2009 005 138 U1 wird vorgeschlagen, die dort als Messraum bezeichnete Messkammer zwischen einer äußeren, einer Begrenzungsplatte zugeordneten Wärmeübertragungsplatte des Stapels von Wärmeübertragungsplatten und der Begrenzungsplatte selbst zu bilden. Die Begrenzungsplatte weist eine mit der Messkammer in Verbindung stehende Öffnung auf, über welche die Messkammer mit dem Messmedium an eine Sensoreinrichtung koppelbar ist, mit der physikalische Änderungen in der Messkammer erfasst werden können, insbesondere temperaturabhängige Druck- bzw. Volumenänderungen.

Im Dokument DE 10 2004 006 390 A1 ist ein Rücklauftemperaturbegrenzer mit Startfunktion offenbart, der zur Regelung eines Wohnungswärmezentrums einsetzbar ist. Im Rücklauf eines Wärmetauschers ist dem Ausgang des Wärmetauschers ein Thermostatventil nachgeschaltet. Im Rücklauf folgt dann auf der Ausgangsseite des Thermostatventils eine Ferngeberkammer. Zwischen dem Thermostatventil und der Ferngeberkammer erstreckt sich eine Kapillarflüssigkeitsleitung. Diese verbindet einen mit der Kapillarflüssigkeit gefüllten Raum in der Ferngeberkammer mit einem Ausdehnungsgefäß des Thermostatventils. Temperaturänderungen in der Ferngeberkammer führen zur Volumenänderung der Kapillarflüssigkeit und verursachen so eine automatische Stellwirkung am Ventil des Thermostatventils.

Das Dokument DE 10 2011 001 544 A1 betrifft einen Plattenwärmetauscher, bei dem eine gegen das Wärmetauscherfluid abgeschlossene Messkammer wenigstens zum Teil in einer Ausnehmung einer äußeren Begrenzungsplatte des Wärmetauschers gebildet ist. Über eine Messkammeröffnung ist die Messkammer, welche im Betrieb mit einem Messmedium befüllt ist, an eine Sensoreinrichtung koppelbar, mit der eine temperaturabhängige Messgröße für die Messkammer und / oder das Messmedium erfasst werden kann.

### Zusammenfassung der Erfindung

Aufgabe der Erfindung ist es, einen Wärmetauscher anzugeben, bei dem eine Messeinrichtung, insbesondere zur Temperaturmessung, auf vereinfachte Art und Weise bereitgestellt ist, insbesondere der fertigungstechnische Aufwand gemindert ist.

Diese Aufgabe wird erfindungsgemäß durch einen Wärmetauscher nach dem unabhängigen Anspruch 1 gelöst. Vorteilhafte Ausgestaltungen sind Gegenstand von abhängigen Unteransprüchen.

Es ist ein Wärmetauscher mit einer Wärmetauschereinrichtung vorgesehen, in der gegeneinander abgeschlossene Durchgänge für Wärmetauscherfluide gebildet sind. Der Wärmetauscher verfügt über eine Anschlusseinrichtung. Die Anschlusseinrichtung steht in Fluidverbindung mit den abgeschlossenen Durchgängen in der Wärmetauschereinrichtung und ist konfiguriert, die Wärmetauschereinrichtung an eine Leitung zum Zu- und Abführen der Wärmetauscherfluide anzuschließen. Sodann ist eine Messkammer vorgesehen, welche an der Anschlusseinrichtung angeordnet ist. Die Messkammer ist gegen ein die Anschlussanrichtung im Betrieb durchströmendes Wärmetauscherfluid abgeschlossen und mit einem Messmedium befüllbar, dessen Temperatur von dem die Anschlusseinrichtung im Betrieb durchströmenden Wärmetauscherfluid beeinflussbar ist. Die Messkammer verfügt über einen Messkammeröffnung, über die die Messkammer an eine Sensoreinrichtung koppelbar ist, mit der eine temperaturabhängige Messgröße für die Messkammer und / oder das Messmedium erfassbar ist.

Im Unterschied zum Stand der Technik ist die Messkammer unmittelbar an der Anschlusseinrichtung gebildet, über die die Wärmetauschereinrichtung an ein Leitungssystem angeschlossen werden kann, über welches im Betrieb des Wärmetauschers die Wärmetauscherfluide zu- und / oder abgeführt werden. Die Wärmetauschereinrichtung ihrerseits kann selbst unabhängig von der Messkammer hergestellt werden, da diese in der Anschlusseinrichtung gebildet ist. Die Messkammer kann in dem Zulauf oder dem Ablauf der Wärmetauscherfluide zugeordneten Teil der Anschlusseinrichtung angeordnet sein. Auch kann vorgesehen sein, dass ein Wärmetauscher über mehrere Messkammern im unmittelbaren Bereich der Anschlusseinrichtung verfügt, die dann im Zulauf und / oder im Ablauf vorgesehen sein können. Die eine oder die mehreren Messkammern des Wärmetauschers sind gegen die im Betrieb genutzten Wärmetauscherfluide abgeschlossen.

Die Messkammer kann einstückig mit der Anschlusseinrichtung ausgeführt sein, zum Beispiel einem Anschlussstutzen.

Über den Messkammeranschluss kann die Messkammer an eine Sensoreinrichtung angeschlossen werden, um so wenigstens eine von der Temperatur abhängige Messgröße zu erfassen, beispielsweise eine Volumenänderung der Messkammer und / oder des in der Messkammer aufnehmbaren Messmediums.

Eine Weiterbildung sieht vor, dass die Messkammer einen Durchgang, der im Betrieb von dem Wärmetauscherfluid durchströmt wird, wenigstens teilweise umgreift. Der in der Anschlusseinrichtung gebildete Durchgang (Zulauf oder Ablauf), welcher im Betrieb von dem Wärmetauscherfluid durchströmt wird, ist bei dieser Ausführungsform ganz oder teilweise von der Messkammer umgeben, wobei vorgesehen sein kann, dass die axiale Ausdehnung der Messkammer entlang des Durchgangs größer als die radiale Ausdehnung der Messkammer ist. Die Messkammer kann als eine Ummantelung des Durchgangs gebildet sein.

Bei einer Ausgestaltung kann vorgesehen sein, dass die Messkammer an einem Messstutzen gebildet ist, bei dem ein Durchgang für das Wärmetauscherfluid gegen die Messkammer abgeschlossen ist. Der Messstutzen ist dann Teil der Anschlusseinrichtung. In Betrieb wird der Messstutzen als Teil der Anschlusseinrichtung von einem oder mehreren Wärmetauscherfluiden durchströmt. Die Temperatur des durchströmenden Wärmetauscherfluids beeinflusst die Temperatur des Messmediums in der Messkammer, wodurch über die Sensoreinrichtung die Temperatur des den Messstutzen durchströmenden Wärmetauscherfluids gemessen werden kann.

Eine Ausführungsform sieht vor, dass der Messstutzen lösbar an der Anschlusseinrichtung angeordnet ist. Eine lösbare Einbindung des Messstutzens in die Anschlusseinrichtung ist beispielsweise mithilfe einer Schraubverbindung ermöglicht.

Bevorzugt sieht eine Fortbildung vor, dass der Messstutzen nicht lösbar an der Anschlusseinrichtung angeordnet ist. Das nichtlösbare Montieren des Messstutzens an der Anschlusseinrichtung kann beispielsweise mittels Löten oder Schweißen ausgeführt werden.

Bei einer Ausgestaltung kann vorgesehen sein, dass der Messstutzen direkt an die Wärmetauschereinrichtung koppelt. Bei dieser Ausführungsform steht der Messstutzen direkt mit der Wärmetauschereinrichtung in Verbindung, also ohne Zwischenschaltung eines oder mehrerer anderer Elemente der Anschlusseinrichtung.

Eine Weiterbildung kann vorsehen, dass der Messstutzen über eine oder mehrere Anschlussbauteile der Anschlusseinrichtung an die Wärmetauschereinrichtung koppelt. Hier ist der Messstutzen über ein oder mehrere Anschlussbauteile, beispielsweise Anschlussstutzen, an der Wärmetauschereinrichtung montiert.

Eine Weiterbildung sieht vor, dass der Messstutzen einen Anschlussstutzen der Anschlusseinrichtung bildend ausgeführt ist. Es kann vorgesehen sein, dass der Messstutzen die Anschlusseinrichtung bildend ausgeführt ist. Bei dieser oder anderen Ausführungsformen kann der Messstutzen auf der zur Wärmetauschereinrichtung distalen Seite direkt oder über ein oder mehrere andere Anschlusselemente der Anschlusseinrichtung an das Leitungssystem für die Wärmetauscherfluide koppeln.

Bei einer zweckmäßigen Ausgestaltung kann vorgesehen sein, dass der Messstutzen einen Grundstutzen und eine Mantelhülse aufweist, wobei die Messkammer zumindest teilweise in einem Raum zwischen dem Grundstutzen und der Mantelhülse gebildet ist. Der Grundstutzen schließt die Messkammer gegenüber dem Durchgang für das Wärmetauscherfluid ab. Die Mantelhülse schließt die Messkammer gegenüber der Umgebung ab.

Eine vorteilhafte Ausführungsform sieht vor, dass der Messkammeranschluss einen Messkammer-Anschlussstutzen aufweist, über den die Sensoreinrichtung an die Messkammer koppelbar ist. Der Messkammer-Anschlussstutzen kann lösbar oder nicht lösbar montiert sein.

Bevorzugt sieht eine Fortbildung vor, dass die Wärmetauschereinrichtung einen Plattenwärmetauscher mit einem Stapel von Wärmeübertragungsplatten aufweist, mit denen die gegeneinander abgeschlossenen Durchgänge für die Wärmetauscherfluide gebildet sind. In einer Ausführungsform verfügt der Plattenwärmetauscher über eine Begrenzungsplatte, die den Stapel von Wärmeübertragungsplatten einseitig begrenzt. Der Plattenwärmetauscher kann von beliebiger Bauform sein. Hierzu gehören insbesondere gedichtete, gelötete und geschweißte Plattenwärmetauscher.

Im Fall der Ausführung der Wärmetauschereinrichtung mit einem Plattenwärmetauscher kann eine Spanneinrichtung vorgesehen sein, die konfiguriert ist, den Stapel von Wärmeübertragungsplatten mit einem äußeren Spanndruck zu beaufschlagen.

Nachfolgend werden weitere vorteilhafte Ausgestaltungen in Verbindung mit dem eine Spannvorrichtung aufweisenden Plattenwärmetauscher erläutert.

Es kann vorgesehen sein, dass die Spanneinrichtung die gestapelte Anordnung mit den Wärmeübertragungsplatten und der zumindest einen Begrenzungsplatte (End- oder Druckplatte) zumindest abschnittsweise, nämlich in einem Eckbereich der gestapelten Anordnung, formschlüssig umgreifend gebildet ist. In einer Ausführungsform ist dann ein Plattenwärmetauscher geschaffen, vorzugsweise in gedichteter Ausführung, mit den folgenden Merkmalen: einer gestapelten Anordnung, aufweisend eine vorder- und eine rückseitige Endplatte, von denen wenigstens eine Endplatte als eine Anschlussplatte ausgeführt ist, Wärmetauscherplatten, die zwischen der vorder- und der rückseitigen Endplatte aufgenommen und gestapelt sind, derart, dass zwischen den Wärmetauscherplatten Hohlräume zum Aufnehmen mehrere Wärmetauschermedien gebildet sind, und Dichtungselementen, die die Hohlräume abdichtend angeordnet sind, und einer Spannvorrichtung, die konfiguriert ist, die gestapelte Anordnung zum Spannen mit einem äußeren Spanndruck zu beaufschlagen, wobei die Spannvorrichtung die gestapelte Anordnung in zumindest einem Abschnitt der gestapelten Anordnung umgreifend gebildet ist.

Der Querschnitt der Spannvorrichtung auf der Innenseite, nämlich der der gestapelten Anordnung zugewandten Seite, ist im Rahmen üblicher Fertigungstoleranzen zumindest in dem wenigstens einen Eckbereich an die äußere Kontur der gestapelten Anordnung angepasst. Es kann auch vorgesehen sein, dass die Formschlüssigkeit in mehreren oder sogar allen Eckbereichen ausgebildet ist. Letzteres ist zum Beispiel gegeben, wenn die Spannvorrichtung die gestapelte Anordnung vollständig formschlüssig umgreifend gebildet ist.

Alternativ kann vorgesehen sein, dass die gestapelte Anordnung mit zwei End- oder Begrenzungsplatten, die auch als Druckgestellplatten bezeichnet werden, versehen ist, die in außen über den Stapel der Wärmeübertragungs- oder Wärmetauscherplatten überstehenden Bereichen mit Zugstangen verbunden sind. Die Zugstangen sind mit Schraubengewinde versehen, so dass der auf den Stapel zu gebende Druck einstellbar ist.

Eine bevorzugte Ausbildung kann vorsehen, dass die Spannvorrichtung in dem wenigstens einen formschlüssig umgriffenen Abschnitt der gestapelten Anordnung im Wesentlichen durchgehend auf der äußeren Oberfläche eines zugeordneten Abschnitts der gestapelten Anordnung aufliegt.

Eine bevorzugte Ausführungsform sieht vor, dass die Spannvorrichtung mit einem oder mehreren geschlossenen Profilelementen und / oder einem oder mehreren flexiblen Spannbändern gebildet ist, die die gestapelte Anordnung jeweils umgreifen. Die Spannbänder sind bevorzugt aus einem Material aus der Gruppe der folgenden Materialien gebildet: Stahl, Kunststoffe und thermoplastische Stoffe. Bei der Herstellung des Plattenwärmetauschers werden das eine oder die mehreren Spannbänder mittels mechanischen Spannens und / oder Aufschrumpfens auf die gestapelten Anordnung aufgezogen. Das eine oder die mehreren geschlossenen Profilelemente können beispielsweise als ein Vierkantprofil oder -rohr gebildet sein. Profilelemente in dieser oder anderen Ausführungsformen stehen als solche in unterschiedlichen Varianten kostengünstig zur Verfügung. Auf diese Weise werden die Herstellungskosten insgesamt minimiert. Bei der Herstellung des Plattenwärmetauschers werden das eine oder die mehreren geschlossenen Profilelemente von der Stirnseite auf die gestapelte Anordnung mit Endplatte(n) und hierzwischen angeordneten Wärmetauscherplatten aufgeschoben. Dieses geschieht bei wenigstens einseitig noch nicht montierten Anschlüssen. Die Anschlüsse können dann nach dem Aufschieben des einen oder der mehreren geschlossenen Profilelemente montiert werden.

Eine bevorzugte Weiterbildung des Plattenwärmetauschers mit Spannvorrichtung sieht vor, dass die Spannvorrichtung mit einem durchgehenden geschlossenen Profilelement gebildet ist, welches sich die gestapelte Anordnung umgreifend über einen Bereich von wenigstens 50% der Länge des Abschnittes der gestapelten Anordnung zwischen Anschlüssen an der Anschlussplatte erstreckt. Bei dieser Ausführungsform bildet das durchgehende geschlossene Profilelement eine Art "Bauchbinde" im Bereich der gestapelten Anordnung zwischen den Anschlüssen. Eine bevorzugte Weiterbildung sieht vor, dass sich das durchgehende geschlossene Profilelement über einen Bereich von wenigstens 75% der Länge der gestapelten Anordnung zwischen den Anschlüssen erstreckt. Weiter bevorzugt ist, dass das durchgehende geschlossene Profilelement eine Länge von wenigstens 90% des Bereiches zwischen den Anschlüssen erfasst. Der Abschnitt der gestapelten Anordnung zwischen den Anschlüssen kann ganz oder teilweise von einem oder mehreren geschlossenen Profilelementen umgriffen sein.

Eine bevorzugte Ausführungsform sieht vor, dass die Spannvorrichtung mit einem durchgehenden geschlossenen Profilelement gebildet ist, welches sich die gestapelte Anordnung umgreifend über die gesamte Länge des Plattenwärmetauschers erstreckt. Es kann vorgesehen sein, dass die Spannvorrichtung mit mehreren geschlossenen Profilelementen gebildet ist, die in Längsrichtung der gestapelten Anordnung alle oder wenigstens paarweise eine im Wesentlichen gleiche Breite aufweisen. Eine vorteilhafte Ausführungsform sieht vor, dass das eine oder die mehreren geschlossenen Profilelemente aus einem Normprofilelement gebildet sind. Die Verwendung von Normprofilelementen unterstützt eine weitere Kostenreduzierung, da derartige Profilelemente als häufig hergestellte Produkte in verschiedenen Bauformen kostengünstig zur Verfügung stehen.

Bevorzugt sieht eine Fortbildung vor, dass Wandabschnitte des einen oder der mehreren geschlossenen Profilelemente als Fachprofile gebildet sind. Eine flache Bauform der Wandabschnitte der geschlossenen Profilelemente unterstützt weiter den minimierten Raumbedarf des Plattenwärmetauschers.

Bei einer vorteilhaften Ausgestaltung kann vorgesehen sein, dass die Spannvorrichtung mit einstellbaren Vorspannelementen gebildet ist, die an dem einen der mehreren geschlossenen Profilelemente angeordnet sind. Die einstellbaren Vorspannelemente sind beispielsweise mit Hilfe von Schraubenelementen gebildet, die in zugeordneter Gewindeabschnitte in dem einen oder den mehreren geschlossenen Profilelementen eingeschraubt werden. Die Schraubenelemente können dann so weit eingedreht werden, dass sie schließlich gegen die gestapelte Anordnung drücken. Bevorzugt sind derartige Schraubenelemente nur auf der Vorder- oder nur auf der Rückseite der gestapelten Anordnung an den geschlossenen Profilelementen vorgesehen. Auf der gegenüberliegenden Seite wird die gestapelte Anordnung dann flächig gegen die Innenseite des geschlossenen Profilelementes gedrückt.

Eine Weiterbildung kann vorsehen, dass die einstellbaren Vorspannelemente konfiguriert sind, den äußeren Spanndruck auf die gestapelte Anordnung einzuleiten, vorzugsweise im Wesentlichen mittelsymmetrisch. Bei einer zweckmäßigen Ausgestaltung kann vorgesehen sein, dass die einstellbaren Vorspannelemente an einem oder allen geschlossenen Profilelementen in Querrichtung der gestapelten Anordnung beabstandet voneinander gebildet sind.

Bevorzugt sieht eine Fortbildung vor, dass das eine oder die mehrere geschlossenen Profilelemente Anschlussbereiche, in welchen an der Anschlussplatte Anschlüsse angeordnet sind, freilassend gebildet sind.

### Beschreibung bevorzugter Ausführungsbeispiele der Erfindung

Die Erfindung wird im Folgenden anhand von Ausführungsbeispielen unter Bezugnahme auf Figuren einer Zeichnung näher erläutert. Hierbei zeigen:
- Fig. 1: eine perspektivische Darstellung eines Wärmetauschers, bei dem eine Wärmetauschereinrichtung mit einem Plattenwärmetauscher gebildet ist und bei dem eine Anschlusseinrichtung einen Messstutzen aufweist,
- Fig. 2: eine perspektivische Darstellung eines Messstutzens,
- Fig. 3: eine Schnittdarstellung des Messstutzens aus Fig. 2,
- Fig. 4: eine perspektivische Darstellung eines Grundstutzen des Messstutzens aus den Fig. 2 und 3, und
- Fig. 5: eine perspektivische Darstellung einer Mantelhülse des Messstutzens aus den Fig. 2 und 3.

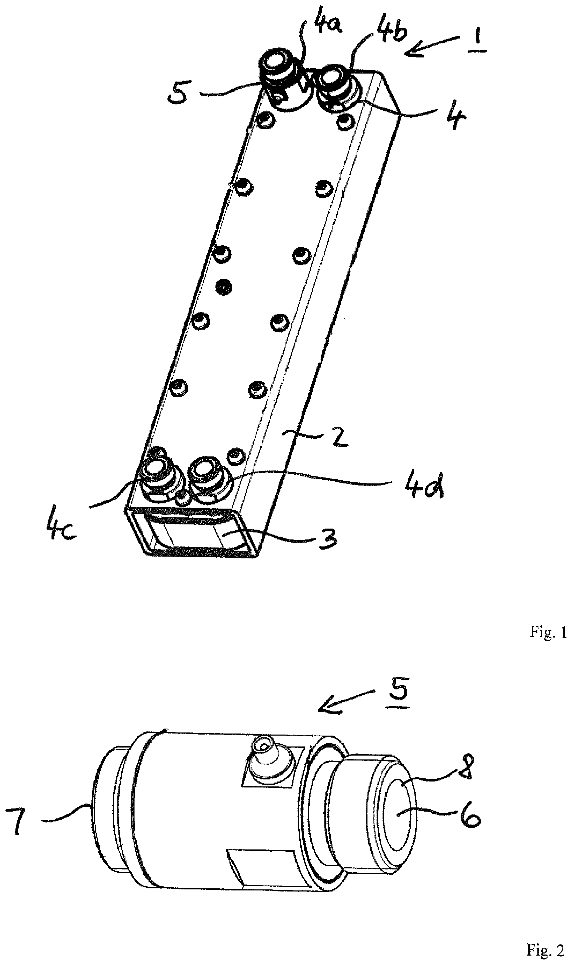

Fig. 1 zeigt eine schematische Darstellung perspektivische Darstellung eines Wärmetauschers 1, bei dem eine Wärmetauschereinrichtung mit einem Plattenwärmetauscher gebildet ist. In einer als umgreifende Hülse ausgeführten Spannvorrichtung 2 ist ein Stapel von Wärmeübertragungsplatten 3 angeordnet. In dem Stapel von Wärmeübertragungsplatten 3 sind Durchgänge für Wärmetauscherfluide gebildet. Eine Anschlusseinrichtung 4 mit mehreren Anschlüssen 4a, ..., 4d koppelt an die in dem Stapel von Wärmeübertragungsplatten 3 gebildeten Durchgänge, derart, dass im Betrieb Wärmetauscherfluide über die mehreren Anschlüsse 4a, ..., 4d zu- und abgeführt werden können. Die Anschlusseinrichtung 4 weist an dem Anschluss 4a einen Messstutzen 5 auf, der unten unter Bezugnahme auf die Fig. 2 bis 5 näher erläutert wird.

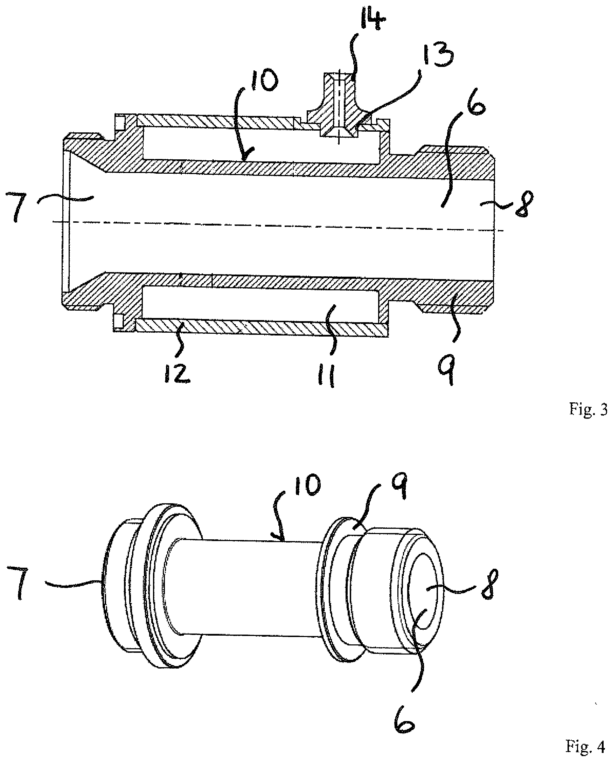

Fig. 2 zeigt eine perspektivische Darstellung des Messstutzens 5. Fig. 3 zeigt eine Schnittdarstellung des Messstutzens 5. Es ergibt sich, dass der Messstutzen 5 einen Durchgang 6 zwischen einem Eingang 7 und einem Ausgang 8 aufweist. Der Durchgang 6 wird im Betrieb des Wärmetauschers 1 von dem Wärmetauscherfluid durchströmt. Der Durchgang 6 ist in einem Grundstutzen 9 gebildet. Auf einem Teil der von Durchgang 6 abgewandten Oberfläche 10 des Grundstutzens 9 ist eine Messkammer 11 gebildet, die gegenüber der Umgebung mithilfe einer Mantelhülse 12 abgeschlossen ist. Gegenüber dem Durchgang 6 ist die Messkammer 11 mittels der Wandung des Grundstutzens 9 abgeschlossen.

In der Mantelhülse 12 ist eine Messkammeröffnung 13 gebildet, über die die Messkammer 11 an eine Sensoreinrichtung (nicht dargestellt) koppelbar ist, um eine temperaturabhängige Messgröße für die Messkammer 11 und / oder ein hierin einzubringendes Messmedium zu erfassen. Bei der dargestellten Ausführungsform ist im Bereich der Messkammeröffnung 13 ein Messkammer-Anschlussstutzen 14 angeordnet, der lösbar oder nicht lösbar montiert sein kann.

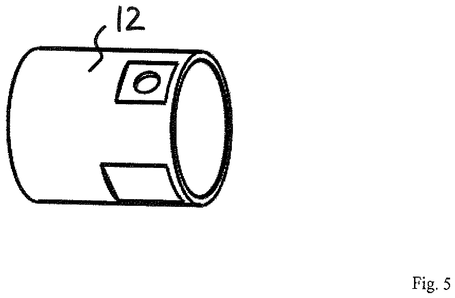

Die Fig. 4 und 5 zeigen perspektivische Darstellungen des Grundstutzens 9 sowie der Mantelhülse 12.

Die in der vorstehenden Beschreibung, den Ansprüchen und den Figuren offenbarten Merkmale der Erfindung können sowohl einzeln als auch in beliebiger Kombination für die Verwirklichung der Erfindung in ihren verschiedenen Ausführungen von Bedeutung sein.

## Patentansprüche

1. Wärmetauscher (1), mit
- einer Wärmetauschereinrichtung, in der gegeneinander abgeschlossene Durchgänge für Wärmetauscherfluide gebildet sind,
- einer Anschlusseinrichtung (4), die in Fluidverbindung mit den abgeschlossenen Durchgängen steht und konfiguriert ist, die Wärmetauschereinrichtung an eine Leitung zum Zu- und Abführen der Wärmetauscherfluide anzuschließen,
- einer Messkammer (11), welche an der Anschlusseinrichtung (4) angeordnet ist, gegen ein die Anschlusseinrichtung (4) im Betrieb durchströmendes Wärmetauscherfluid abgeschlossen ist und mit einem Messmedium befüllbar ist, dessen Temperatur von dem die Anschlusseinrichtung (4) im Betrieb durchströmenden Wärmetauscherfluid beeinflussbar ist, und
- eine Messkammeröffnung (13), über die die Messkammer (11) an eine Sensoreinrichtung koppelbar ist, mit der eine temperaturabhängige Messgröße für die Messkammer (11) und / oder das Messmedium erfasst wird.

2. Wärmetauscher nach Anspruch 1, **dadurch gekennzeichnet, dass** die Messkammer (11) einen Durchgang (6), der im Betrieb von dem Wärmetauscherfluid durchströmt wird, wenigstens teilweise umgreift.

3. Wärmetauscher nach Anspruch 1 oder 2, **dadurch gekennzeichnet, dass** die Messkammer (11) an einem Messstutzen (5) gebildet ist, bei dem ein Durchgang (6) für das Wärmetauscherfluid gegen die Messkammer (11) abgeschlossen ist.

4. Wärmetauscher nach Anspruch 3, **dadurch gekennzeichnet, dass** der Messstutzen (5) lösbar an der Anschlusseinrichtung (4) angeordnet ist.

5. Wärmetauscher nach Anspruch 3, **dadurch gekennzeichnet, dass** der Messstutzen (5) nicht lösbar an der Anschlusseinrichtung (4) angeordnet ist.

6. Wärmetauscher nach mindestens einem der Ansprüche 3 bis 5, **dadurch gekennzeichnet, dass** der Messstutzen (5) direkt an die Wärmetauschereinrichtung koppelt.

7. Wärmetauscher nach mindestens einem der Ansprüche 3 bis 5, **dadurch gekennzeichnet, dass** der Messstutzen (5) über eine oder mehrere Anschlussbauteile der Anschlusseinrichtung (4) an die Wärmetauschereinrichtung koppelt.

8. Wärmetauscher nach mindestens einem der Ansprüche 3 bis 7, **dadurch gekennzeichnet, dass** der Messstutzen (5) einen Anschlussstutzen der Anschlusseinrichtung (4) bildend ausgeführt ist.

9. Wärmetauscher nach mindestens einem der Ansprüche 3 bis 8, **dadurch gekenn- zeichnet**, dass der Messstutzen (5) einen Grundstutzen (9) und eine Mantelhülse (12) aufweist, wobei die Messkammer (11) zumindest teilweise in einem Raum zwischen dem Grundstutzen (9) und der Mantelhülse (12) gebildet ist.

10. Wärmetauscher nach mindestens einem der vorangehenden Ansprüche, **dadurch gekennzeichnet, dass** an der Messkammeröffnung (13) einen Messkammer-Anschlussstutzen (14) aufweist, über den die Sensoreinrichtung an die Messkammer (11) koppelbar ist.

11. Wärmetauscher nach mindestens einem der vorangehenden Ansprüche, dadurch **ge**- **kennzeichnet**, dass die Wärmetauschereinrichtung einen Plattenwärmetauscher mit einem Stapel von Wärmeübertragungsplatten aufweist, mit denen die gegeneinander abgeschlossenen Durchgänge für die Wärmetauscherfluide gebildet sind.

## Claims

1. A heat exchanger (1), having
- a heat exchanger device, in which passages for heat-exchanger fluids, which are closed with respect to one another, are formed,
- a connector device (4), which is in fluid connection with the closed passages and is configured for connecting the heat exchanger device to a line for supplying and draining the heat-exchanger fluids,
- a measuring chamber (11), which is arranged on the connector device (4), is closed off with respect to a heat-exchanger fluid flowing through the connector device (4) during operation, and can be filled with a measuring medium, the temperature of which can be influenced by the heat-exchanger fluid flowing through the connector device (4) during operation, and
- a measuring chamber opening (13), via which the measuring chamber (11) can be coupled to a sensor device, using which a temperature-dependent measurement variable for the measuring chamber (11) and/or the measuring medium is detected.

2. The heat exchanger according to Claim 1, **characterized in that** the measuring chamber (11) at least partially encompasses a passage (6), through which the heat-exchanger fluid flows during operation.

3. The heat exchanger according to Claim 1 or 2, **characterized in that** the measuring chamber (11) is formed on a measurement connection piece (5), in which a passage (6) for the heat-exchanger fluid is closed with respect to the measuring chamber (11).

4. The heat exchanger according to Claim 3, **characterized in that** the measurement connection piece (5) is arranged on the connector device (4) in a detachable manner.

5. The heat exchanger according to Claim 3, **characterized in that** the measurement connection piece (5) is arranged on the connector device (4) in a non-detachable manner.

6. The heat exchanger according to at least one of Claims 3 to 5, **characterized in that** the measurement connection piece (5) couples to the heat-exchanger device directly.

7. The heat exchanger according to at least one of Claims 3 to 5, **characterized in that** the measurement connection piece (5) couples to the heat-exchanger device via one or more connector components of the connector device (4).

8. The heat exchanger according to at least one of Claims 3 to 7, **characterized in that** the measurement connection piece (5) is provided forming a connector piece of the connector device (4).

9. The heat exchanger according to at least one of Claims 3 to 8, **characterized in that** the measurement connection piece (5) has a base connection piece (9) and a casing sleeve (12), wherein the measuring chamber (11) is formed at least partially in a space between the base connection piece (9) and the casing sleeve (12).

10. The heat exchanger according to at least one of the preceding claims, **characterized in that** it has a measuring chamber connection piece (14) at the measuring chamber opening (13), via which the sensor device can be coupled to the measuring chamber (11).

11. The heat exchanger according to at least one of the preceding claims, **characterized in that** the heat exchanger device has a plate heat exchanger with a stack of heat-conducting plates, with which the passages for the heat-exchanger fluids, which are closed with respect to one another, are formed.

## Revendications

1. Echangeur de chaleur (1), avec
- un dispositif d'échangeur de chaleur dans lequel sont formés des passages isolés les uns par rapport aux autres pour des fluides d'échangeur de chaleur,
- un dispositif de raccord (4), qui est en liaison de fluide avec les passages isolés et est configuré pour raccorder le dispositif d'échangeur de chaleur à une conduite pour alimenter et évacuer les fluides d'échangeur de chaleur,
- une chambre de mesure (11), laquelle est disposée sur le dispositif de raccord (4), est isolée envers un fluide d'échangeur de chaleur traversant le dispositif de raccord (4) en fonctionnement et peut être remplie d'un milieu de mesure dont la température peut être influencée par le fluide d'échangeur de chaleur traversant le dispositif de raccord (4) en fonctionnement, et
- une ouverture de chambre de mesure (13) par le biais de laquelle la chambre de mesure (11) peut être couplée à un dispositif de détection avec lequel une valeur de mesure fonction de la température est saisie pour la chambre de mesure (11) et/ou le milieu de mesure.

2. Echangeur de chaleur selon la revendication 1, **caractérisé en ce que** la chambre de mesure (11) entoure au moins en partie un passage (6), qui est traversé en fonctionnement par le fluide d'échangeur de chaleur.

3. Echangeur de chaleur selon la revendication 1 ou 2, **caractérisé en ce que** la chambre de mesure (11) est formée sur une tubulure de mesure (5) pour laquelle un passage (6) pour le fluide d'échangeur de chaleur est isolé de la chambre de mesure (11).

4. Echangeur de chaleur selon la revendication 3, **caractérisé en ce que** la tubulure de mesure (5) est disposée de façon amovible sur le dispositif de raccord (4).

5. Echangeur de chaleur selon la revendication 3, **caractérisé en ce que** la tubulure de mesure (5) est disposée non amovible sur le dispositif de raccord (4).

6. Echangeur de chaleur selon au moins l'une quelconque des revendications 3 à 5, **caractérisé en ce que** la tubulure de mesure (5) est directement couplée au dispositif d'échangeur de chaleur.

7. Echangeur de chaleur selon au moins l'une quelconque des revendications 3 à 5, **caractérisé en ce que** la tubulure de mesure (5) est couplée au dispositif d'échangeur de chaleur par un ou plusieurs composants de raccord du dispositif de raccord (4).

8. Echangeur de chaleur selon au moins l'une quelconque des revendications 3 à 7, **caractérisé en ce que** la tubulure de mesure (5) est exécutée de manière à former une tubulure de raccord du dispositif de raccord (4).

9. Echangeur de chaleur selon au moins l'une quelconque des revendications 3 à 8, **caractérisé en ce que** la tubulure de mesure (5) comporte une tubulure de base (9) et un manchon d'enveloppe (12), la chambre de mesure (11) étant formée au moins en partie dans un espace situé entre la tubulure de base (9) et le manchon d'enveloppe (12).

10. Echangeur de chaleur selon au moins l'une quelconque des revendications précédentes, **caractérisé en ce qu'**il comporte une tubulure de raccord de chambre de mesure (14) sur l'ouverture de chambre de mesure (13) au moyen de laquelle le dispositif de détection peut être couplé à la chambre de mesure (11).

11. Echangeur de chaleur selon au moins l'une quelconque des revendications précédentes, **caractérisé en ce que** le dispositif d'échangeur de chaleur comporte un échangeur de chaleur à plaques avec un empilage de plaques de transfert de chaleur avec lesquelles sont formés les passages isolés les uns par rapport aux autres pour les fluides d'échangeur de chaleur.
